# EUROPEAN PATENT SPECIFICATION

(11) **EP 3 777 339 B1**
(45) Date of publication and mention of the grant of the patent: **05.10.2022**
(21) Application number: 18715583.3
(22) Date of filing: 27.03.2018
(51) Int. Cl.: H04L 67/00, H04W 4/50, H04W 4/70, H04W 48/18

(54) **OPTIMIZED TRANSMISSION OF APPLICATION DATA TO AN IOT DEVICE**
OPTIMIERTE ÜBERTRAGUNG VON ANWENDUNGSDATEN AN EINE IOT-VORRICHTUNG
TRANSMISSION OPTIMISÉE DE DONNÉES D'APPLICATION À UN DISPOSITIF D'IOT

(43) Date of publication of application: 17.02.2021
(73) Proprietor: Telefonaktiebolaget LM Ericsson (publ), 164 83 Stockholm (SE)
(72) Inventor: LARMO, Anna, 02600 ESPOO (FI); JIMÉNEZ, Jaime, 00530 HELSINKI (FI)
(74) Representative: Zacco Sweden AB
(86) International application number: PCT/EP2018/057718
(87) International publication number: WO 2019/185118

(56) References cited:
- WO-A1-2017/019238
- US-A1- 2014 050 085
- US-A1- 2016 227 598

## Description

### Technical field

The present application relates to a method for transmitting application data to an internet of things, IoT, device and relates to the corresponding device management entity configured to transmit the application data.

Further a computer program comprising program code and a carrier comprising the computer program is provided.

### Background

Internet of Things (IoT) technologies are entering the mobile network with recent 3GPP standards on Narrow Band IoT (NB-IoT) and machine type communication (MTC) enhancements for LTE (Long Term Evolution).

NB-IoT is designed as an approach for delay tolerant and very low power loT devices as part of the LTE system and for refarming GSM carriers. On the other hand, LTE-M (LTE for Machines) is the natural evolution of LTE to support the special characteristics of low power small data loT devices. LTE-M supports higher bitrates as well as lower latency when compared to NB-IoT with the cost of higher power consumption and slightly worse coverage.

In the device market for both NB-IoT and LTE-M devices exist supporting both modes.

Currently some operators are most likely planning to roll out either NB-IoT or LTE-M support in their networks. However, it is fully possible in the future to have operator networks supporting both modes.

Firmware updates are used to update the low level control software of a device. Often firmware updates or other application data for the loT device, including software application(s), are performed over the air. The size of the firmware update may vary but may be rather large and may have several MBytes.

Light weight M2M (Machine to Machine, LWM2M) is an Open Mobile Alliance (OMA) defined standard for loT device management remotely. OMA LWM2M V1.0 defines the firmware update object that enables the management of firmware.

Sending large packets over NB-IoT may take time and may be difficult due to long latencies. It is not clear that, e.g., if the Transmission Control Protocol (TCP) will work over NB-IoT. As firmware updates or other application data for the loT device may often utilize TCP as a transport protocol to ensure delivery, this may be a challenge. Accordingly a need exists to efficiently transmit application data such as a firmware or software update to the loT device.

Transmission of application data to loT devices via different radio networks is known from US 2014/050085, WO 2017/019238 and US 2016/227598, whereby each IoT device selects a radio channel depending on requirements and environmental conditions.

### Summary

This need is met by features of the independent claims. Further aspects are described in the dependent claims.

According to a first aspect a method is provided for transmitting application data to an loT device which is accessible via two different radio networks having different transmission bandwidths. The method carried out by a device management entity comprises this steps of determining that the application data is available for the loT device. One or more parameter requests are transmitted to the loT device in which the loT device is requested to inform the device management entity about a plurality of operating parameters of the loT device. The device management entity then receives a parameter response to the one or more parameter requests, wherein the parameter response comprises response parameters including at least one of the requested plurality of operating parameters. Furthermore, one of the radio networks is selected for the transmission of the application data in dependence on the received response parameters and the application data is transmitted to the loT device over the selected radio network.

Based on the received operating parameters of the loT device, the device management entity is capable of transmitting the application data for the loT device over the best available network.

Furthermore, the corresponding device management entity is provided comprising a memory and at least one processing unit, wherein the memory contains instructions executable by the at least one processing unit and wherein device management entity is operative to work as mentioned above or as discussed in further detail below.

Alternatively a device management entity configured to transmit the application data to the loT device is provided which is accessible via the two different radio networks having different transmission bandwidths. The device management entity comprises a first module configured to determine that the application data is available for the loT device. The device management entity furthermore comprises a second module configured to transmit one or more parameter requests to the loT device in which the loT device is requested to inform the device management entity about a plurality of operating parameters of the loT device. A third module of the device management entity is configured to receive a parameter response to the parameter request which includes at least one of the requested operating parameters. A fourth module of the device management entity is configured to select one of the radio networks for the transmission of the application data in dependence on the received response parameters and a fifth module is configured to transmit the application data to the loT device over the selected radio network.

Additionally a computer program comprising program code to be executed by at least one processing unit of the device management entity is provided wherein execution of the program code causes the at last one processing unit to execute a method as mentioned above or as discussed in further detail below.

It is to be understood that the features mentioned above and features yet to be explained below can be used not only in the respective combinations indicated, but also in other combinations or in isolation without departing from the scope of the present invention. Features of the above-mentioned aspects and embodiments described below may be combined with each other in other embodiments unless explicitly mentioned otherwise.

### Brief description of the drawings

The foregoing and additional features and effects of the application will become apparent from the following detailed description when read in conjunction with the accompanying drawings in which like reference numerals refer to like elements.
Figure 1 shows a schematic overview over a system in which a device management entity manages different loT devices and selects the best radio network part for the transmission of application data to the loT devices.
Figure 2 shows an example table which indicates, based on a defined data model, which radio network should be used for transmitting the application data.
Figure 3 shows an example representation of a message exchange between an loT device and the device management entity of Figure 1 for transmitting application data with a radio network selected by the device management entity.
Figure 4 shows a further example schematic representation of a message exchange between the entities of Figure 1 in which it is decided not to switch the radio network for transmitting the application data.
Figure 5 shows an example flowchart of a method carried out by the device management entity of Figure 1 used for transmitting the application data to the loT device.
Figure 6 shows a schematic representation of the device management entity of Figure 1 selecting a radio network for the loT device.
Figure 7 shows another example schematic representation of the device management entity of Figure 1.

### Detailed description

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are to be illustrative only.

The drawings are to be regarded as being schematic representations, and elements illustrated in the drawings are not necessarily shown to scale. Rather, the various elements are represented such that their function and general-purpose becomes apparent to a person skilled in the art. Any connection or coupling between functional blocks, devices, components of physical or functional units shown in the drawings and described hereinafter may also be implemented by an indirect connection or coupling. A coupling between components may be established over a wired or wireless connection. Functional blocks may be implemented in hardware, software, firmware, or a combination thereof.

As will be discussed below one aspect described hereinafter is to introduce new functionality in the LWM2M specification to support switching from a Narrow Band loT mode to the LTE-M mode for transmitting application data and optionally back again, whenever the network supports those modes and the radio link from the IoT device is good enough to support the switching between both technologies. However the application is not restricted to the LWM2M specification, other protocols might be used instead e.g. device management protocols such as OMA-DM (Open Mobile Alliance-Device Management). As far as the radio technologies are concerned, the switching may also occur between two other technologies selected from Wi-Fi, GSM, Bluetooth Low Energy etc.

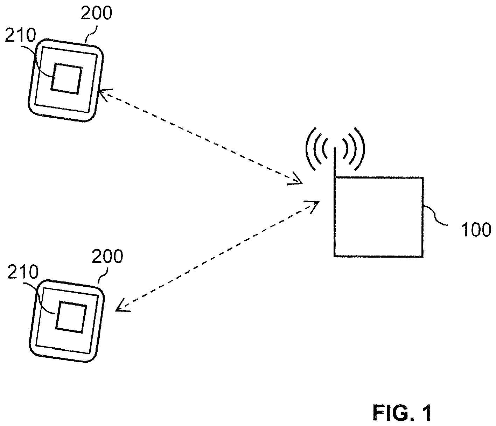

Figure 1 shows an embodiment in which a device management entity 100 configured to manage a plurality of loT devices 200 is provided wherein two different radio networks are at least temporarily available for the communication between the device management entity 100 and the different loT devices 200.

In the following it is assumed that the loT devices 200 uses by default a lower performance radio technology such as Narrow Band loT, but a higher performance radio technology such as LTE-M is also available for the loT device and can be used for firmware updates or software updates or any other application data for a software application to be used by the loT devices.

The loT device is usually cost optimized and therefore a resource constrained device, for example battery capacity of the loT device may be limited leading to a limited battery life time in the range of several months to a few years.

For the transmission of application data such as a software or hardware update to the loT device, the LWM2M protocol is used which is an application layer, communication protocol between an LWM2M server and a LWM2M client located in the loT device. Accordingly, the loT devices 200 shown in Figure 1 can comprise an LWM2M client 210 and the device management entity 100 comprises the server which manages the different loT devices 200.

A new LWM2M object is provided to instruct the loT devices 200 which are capable to operate in the two radio networks to switch from a first lower performance radio technology to a second higher performance radio technology if such is available with favorable conditions.

In order for the server or management entity 100 to judge if the relevant resources of the loT device are available, it should receive observations over different operating parameters of the loT device. For this determination of the operating parameters of the loT device a protocol such as CoAP (Constrained Application Protocol) may be used.

The device management entity 100 can request at least one of the following parameters:
A battery level which indicates the current battery level of the loT device, e.g. as a percentage if a battery is present. Using the lightweight M2M protocol a read operation may be used to access this value at the loT devices. In the following the request operation, here the read operation, may comprise the following format:
object ID/object instance ID/resource ID.

The object ID indicates the object, the object instance ID indicates the object instance to read and the resource ID indicates the resource to read. Accordingly the request object *Resource 3*/*0*/*9* may indicate that from device object (3) with the instance (0) the battery level (9) is requested.

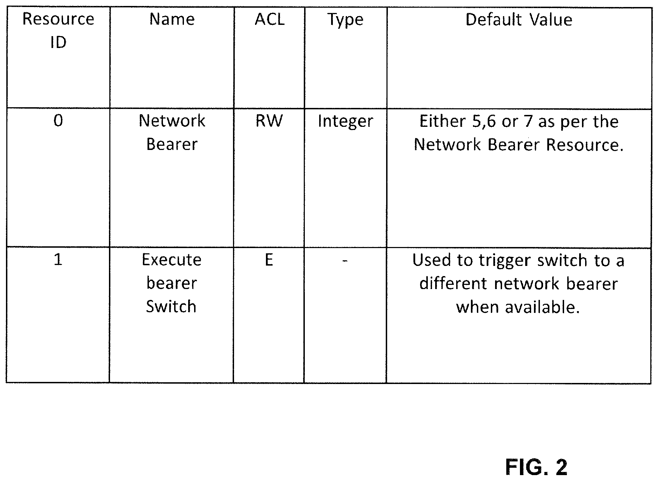

A further parameter, which may be requested by the device management entity, can be the used network bearer. Accordingly the request object *Resource 4*/*0*/*0* may indicate connectivity monitoring (4) for object instance (middle 0) requesting the currently used network bearer (last 0) by the loT device, wherein in response the loT may indicate the used bearer as LTE-TDD which may have a value of 5, LTE-FTT which may have a value of 6 or NB-IoT which may have a value of 7 as shown in the table of figure 2. For LTE-M a new value may be defined.

A further operating parameter to be requested from the IoT device can be the available network bearers. The request object *Resource 4-0-1* may indicate connectivity monitoring (4) for object instance (0) requesting a list of the current available network bearers (1) at the loT device.

A further parameter that may be requested by the device management entity 100 may be the radio signal strength containing the signal strengths for current used bearer, e.g. in dBm. Accordingly the requested object resource 4-0-2 may indicate connectivity monitoring (4) for object instance (0) requesting the signal strength of the current bearer in dBm. The server can use this information to estimate the coverage for the loT device for the current used radio technology. The signal strength of the non-used bearer can be determined e.g. from a beacon or other signals used to advertise the system. Another parameter requested can be how long the signal has the current strength, or whether the loT device is actually capable of switching.

A further parameter requested by the entity 100 can be the firmware update status including the information about the current state of the firmware update process. For example the request object *Resource 5-0-3* may indicate firmware update (5) for object instance (0) requesting the information about the current state (3) of the firmware update process. A response value of 0 corresponding to idle is desirable in order not to interrupt an ongoing firmware download/update during the switching.

Once the device management entity 100 has received at least some of the above discussed operating parameters, a switch to another bearer can be triggered with the "execute bearer switch" object which is shown in Figure 2. The table shows the two elements of the network bearer and the execute bearer switch. The table indicates which bearer should be used and allows for the management entity 100 to trigger the switching. Resource ID indicates the resource identifiers the two resources. The Access Control List defined for each is; Network bearer can be Read (R) and Written (W), Execute bearer Switch can be only Executed (E) , thus triggering the switch on the device.

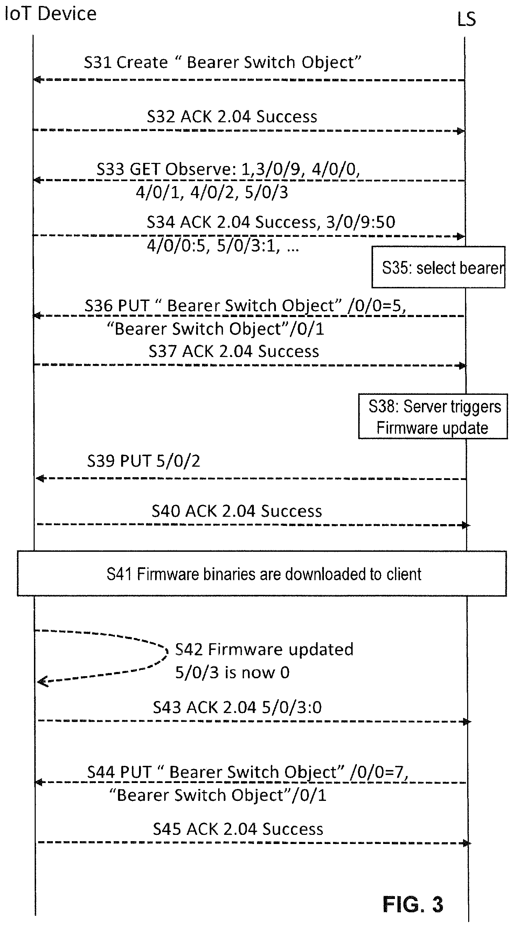

Figure 3 shows a message exchange between the IoT device 200 comprising the client and the device management entity 100 comprising the server. In step S31 the server creates the bearer switch object and in step S32 the creation of the object is acknowledged to the server.

In step S33 the server 100 requests specific parameters from the loT device 200, for example observations over specific resources, like the currently used and/or available network bearer(s), the battery level of the loT device or other operating parameters discussed above. In step S34 the client loT device returns the requested information, here in the JSON format (JavaScript Object Notation). In step S35 the device management entity selects the radio network or bearer and sets in step S36 the network bearer to the best bearer for the transmission of the application data, e.g. the firmware updates, and sends a switch command to the loT device. In step S37, once the loT device has switched bearers, it will send a notification of the state change. In step S38 the device management entity can trigger the firmware update by sending the firmware update in step S39 which is acknowledged by the loT device in step S40. Step S39 may just include a URL from where the device then needs to fetch the update as the update is normally too large to be included in step S39. In step S41 the firmware may be finally downloaded to the client using the selected radio network and the firmware update is completed in step S42. Once the device has updated the firmware, it sends a notification of state change, e.g. an acknowledge (ACK) with the object 5/0/3:0 (idle state after successful updating of the firmware). The firmware update object (5) 5/0/3 contains as last number the state information (0: idle, 1: Downloading, 2: Downloading, 3: Updating) which is set from 3 to 0. After the update is complete and the device returned the firmware update idle mode, a switch back to the earlier used bearer/radio network can be triggered. Upon receiving the notification in step S43 the device management entity 100 may set the network bearer to the earlier used bearer/radio network, here the Narrow Band loT radio network, and triggers the switchback to the original bearer in step S44 which is better suited for cost optimized loT device (for example consuming less energy). The switch back is acknowledged by the loT device in step S45.

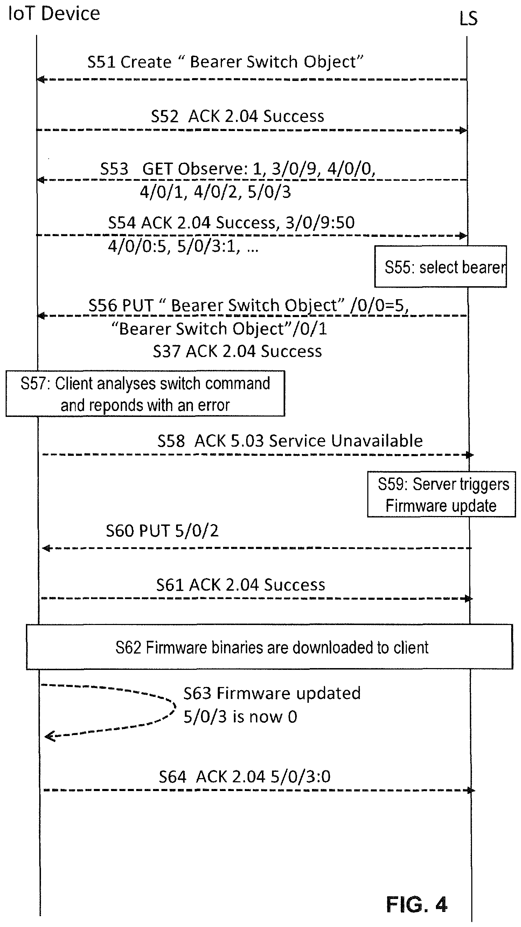

In connection with Figure 4 an embodiment will be disclosed in which the IoT client decides not to switch to the other bearer/radio network. The loT device 200 needs to estimate the quality of the second higher performance radio technology before switching. As the radio link quality and interference from other devices may change rapidly, the device may need to perform radio link quality measurements to estimate whether the switching is still justified. In case the link quality in the used (for example lower performance) radio technology is better than in the other (higher performance) radio technology at the time the order to switch is received, the device may decide not to switch. This is explained in further detail in connection with Figure 4. In step S51 the server creates the bearer switch object as mentioned above in connection with Figure 3 in step S31. Steps S51 to S56 correspond to steps S31 to S36 discussed above and are not discussed in detail anymore.

In step S57 the client analyses the switch command and as the loT device has more recent measurement data available which indicate that no switching is preferred, the client responds in step S58 to the server with an indication that no switch is performed as shown by the indicated ACK message object *5.0.3 service unavailable.* In step S59 the server then triggers the firmware update and the firmware update is sent over the present (original) bearer which is the bearer having the lower transmission bandwidth compared to the other radio network to which the server wanted to switch. In step S60 to S64 the firmware update is then sent and completed over the original bearer.

In the embodiment discussed in connection with Figure 4 the application data has been sent over the original radio network. In another embodiment it may be decided by the server that the application data are currently not transmitted at all if the connection quality of both radio access networks is lower than a defined threshold.

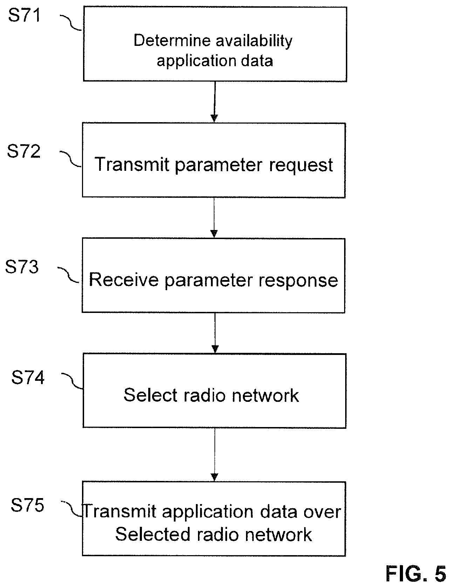

Figure 5 summarizes some of the steps carried out in the examples discussed in connection with Figures 3 and 4.

In step S71 the device management entity operating a server determines that application data such as a firmware update is available for one of the loT devices 100. In Figures 3 and 4 this was reflected by steps S31 and S51 as based on this determination the new object is created. In step S72 a parameter request is transmitted to the loT device for which the application data is available (reflected by steps S33 and S53 of Figures 3 and 4). This can be a single request or several requests requesting the loT device to inform the device management entity about at least some of the above discussed operating parameters of the loT device. In step S73 the device management entity receives the parameter response including at least one of the requested operating parameters (reflected by steps S34 and S54 of Figures 3 and 4). Based on the received feedback in the parameter response the device management entity 100 can select in step S74 the appropriate radio network used to transmit the application data. In step S75 the application data is validly transmitted over the selected radio network (reflected by steps S40 and S61 of Figures 3 and 4).

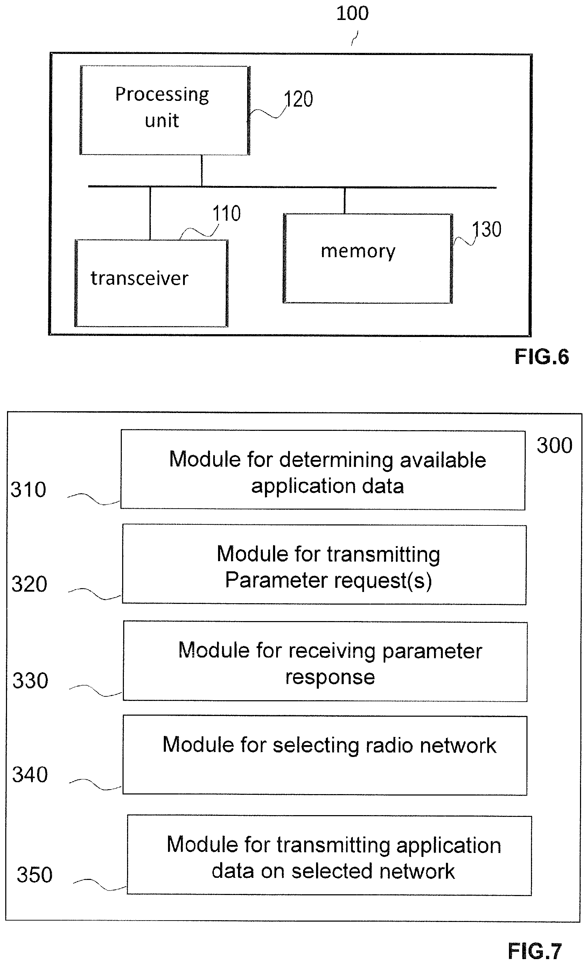

Figure 6 shows a schematic architectural view of the device management entity 100 which can carry out the above discussed operation of the selection of the appropriate radio network. The entity 100 comprises an interface or transceiver 110 which is provided for transmitting user data or (control) messages to other entities such as the loT devices. The transceiver 110 symbolizes the capability of transmitting inter alia the parameter request the loT device. The transceiver is furthermore configured to receive user data or (control) messages from other entities such as the message as discussed above in connection with Figures 3 and 4 from the loT devices. The entity furthermore comprises a processing unit 120 which is responsible for the operation of the entity 100. The processing unit 120 comprises one or more processors and can carry out instructions stored on a memory 130, wherein the memory may include a read-only memory, a random access memory, a mass storage, a hard disk or the like. The memory 130 can furthermore comprise suitable program code to be executed by the processing unit so as to implement the above described functionalities in which the entity 100 is involved.

Figure 7 shows a further schematic architectural view of an entity 300 which can operate as device management entity similar to entity 100 discussed above in connection with figures 1 to 5. The device management entity 300 comprises a first module 310 configured to determine that application data is available for the IoT device. A module 320 is provided for transmitting one or more parameter request to the loT device by which the loT device should inform the entity 300 about the operating parameters. A module 330 is provided for receiving the parameter response including at least some of the requested operating parameters. A module 340 is provided for selecting the radio network based on the received response parameters and a module 350 is provided for transmitting the application data on the selected radio network.

From the above discussion some general conclusions can be drawn:
The loT device can be connected to the device management entity over the radio network having the lower transmission bandwidth compared to the other radio access network. Accordingly, when one of the radio network is selected in dependence on the received response parameters, the radio network having the higher transmission bandwidth can be selected and a switch command can be transmitted to the loT device instructing the loT device to switch the radio access network to the radio access network having the higher transmission bandwidth.

As shown in Figures 3 and 4 the device management entity can furthermore receive a switch confirmation from the loT device by which the entity 100 is informed that the loT device has switched to the other radio network as mentioned in connection with Figure 3 in step S36.

However it is also possible that the device management entity receives a rejection message from the loT device by which the device management entity 100 is informed that the loT device has rejected the switch command and has not switched to the other radio access network as discussed in connection with Figure 4 in step S57.

The device management entity can furthermore determine that the application data was successfully transmitted to the loT device over the radio access network having the higher transmission bandwidth and a further switch command is transmitted to the loT device instructing the loT device to switch the radio access network back to the radio access network having the lower transmission bandwidth.

In a further example the loT device may also switch automatically back to the other radio access network so that the loT device can inform the device management entity about the switchback result receiving a command from entity 100 beforehand.

The application data can comprise a software or firmware update for the loT device.

The operating parameters exchanged between the entity 100 and the loT device can be exchanged using a protocol such as the lightweight machine to machine (LWM2M) protocol. However, other protocols may be used such as SNMP ( Simple Network Management Protocol) or TR69 (Technical Report 69).

The radio network or radio access network can comprise the network with the lower transmission bandwidth such as the Narrow Band loT radio network and can comprise the higher bandwidth network such as the LTE-M2M radio network.

When the switch command is transmitted to the loT device, the loT device can be instructed to switch to the LTE-M2M radio network for the transmission of the application data. Additionally a further switch command may be transmitted to the loT device by which the loT device is instructed to switch back to the Narrow Band loT radio network when the transmission of the application data is completed.

The entity 100 can furthermore determine a connection quality of the radio network having the higher transmission bandwidth between the loT device and the device management entity taking into account the received response parameters. When the connection quality is lower than a defined threshold, the application data can be transmitted over the radio network having the lower transmission bandwidth as discussed above in connection with Figure 4.

When requesting the operating parameters, the entity 100 can request at least one of the following operating parameters from the loT device: a battery level of the loT device, a used network bearer, the available network bearers, a radio signal strength of the available network bearers, a software status indicating which software version the loT device is using.

The entity 100 can furthermore determine the connection quality between the loT device and the device management entity of the two radio networks and can determine not to transmit the application data if the connection quality of both radio networks is lower than a predefined threshold.

The above discussed solution has the advantage that hardware or software updates can be delivered to the loT devices with a better performance while still preserving the main advantages of the radio network having the lower transmission bandwidth and which has a lower power consumption and an extended coverage.

## Claims

1. A method, by a device management entity (100), for transmitting application data to an Internet of Things, loT, device (200) which is accessible via two different radio networks having different transmission bandwidths, the method comprising:
- determining that the application data is available for the loT device (200),
- transmitting one or more parameter requests to the loT device (200) in which the loT device is requested to inform the device management entity (100) about a plurality of operating parameters of the loT device,
- receiving a parameter response to the one or more parameter requests, the parameter response comprising response parameters including at least one of the requested plurality of operating parameters,
- selecting one of the radio networks for the transmission of the application data in dependence on the received response parameters,
- transmitting the application data to the loT device (200) over the selected radio network;
wherein the lot device (200) is connected to the device management entity (100) over the radio network having a lower transmission bandwidth than the other radio network, wherein selecting one of the radio networks comprises selecting the other radio network having the higher transmission bandwidth, the method comprising:
- transmitting a switch command to the loT device (200) instructing the loT device to switch the radio network to the other radio network.

2. The method according to claim 1, further comprising:
- receiving a switch confirmation from the loT device (200) by which the device management entity is informed that the loT device has switched to the other radio network.

3. The method according to claim 1, further comprising:
- receiving a rejection message from the loT device (200) by which the device management entity is informed that the loT device has rejected the switch command and has not switched to the other radio network.

4. The method according to claim 1 or 2, further comprising:
- determining that the application data was successfully transmitted to the loT device (200) over the other radio network,
- transmitting a further switch command to the loT device (200) instructing the loT device to switch the radio network back to the radio network having the lower transmission bandwidth, wherein the application data comprises a software update for the loT device (200), wherein the operating parameters are exchanged between the device management entity (100) and the loT device (200) using a Light Weight Machine to Machine, LWM2M, protocol, and wherein the two radio networks comprise a Narrowband loT radio network and a LTE-M2M radio network.

5. The method according to claim 4, wherein transmitting a switch command to the loT device (200) comprises instructing the IOT device to switch to the LTE-M2M radio network for the transmission of the application data, wherein transmitting a further switch command to the loT device comprises instructing the loT device (200) to switch back to the Narrowband loT radio network when the transmission of the application data is completed.

6. The method according to any of the preceding claims, further determining a connection quality of the radio network having the higher transmission bandwidth between the loT device (200) and the device management entity (100) taking into account the received response parameters, wherein when the connection quality is lower than a defined threshold, the application data is transmitted over the radio network having the lower transmission bandwidth.

7. The method according to any of the preceding claims, wherein the transmitted parameter request comprises the request to inform the device management entity (100) about at least one of the following operating parameters: a battery level of the loT device, a used network bearer, the available network bearers, a radio signal strength of the available network bearers, a software status indicating which software version the loT device is using.

8. The method according to any of the preceding claims, further determining a connection quality between the loT device (200) and the device management entity (100) of the two radio networks, wherein it is determined not to transmit the application data if the connection quality of both radio networks is lower than a defined threshold.

9. A device management entity (100) configured to transmit application data to an Internet of Things, loT, device (200) which is accessible via two different radio networks having different transmission bandwidths,, the device management entity comprising a memory (130) and at least one processing unit (120), the memory containing instructions executable by the at least one processing unit, wherein the device management entity is operative to:
- determine that the application data is available for the loT device (200),
- transmit one or more parameter requests to the loT device in which the loT device is requested to inform the device management entity about a plurality of operating parameters of the loT device,
- receive a parameter response to the one or more parameter requests, the parameter response comprising response parameters including at least one of the requested plurality of operating parameters,
- select one of the radio networks for the transmission of the application data in dependence on the received response parameters,
- transmit the application data to the loT device over the selected radio network;
wherein the loT device (200) is connected to the device management entity (100) over the radio network having a lower transmission bandwidth than the other radio network, the device management entity being operative, for selecting one of the radio networks, to select the other radio network having the higher transmission bandwidth, and to transmit a switch command to the loT device (200) instructing the loT device to switch the radio network to the other radio network.

10. The device management entity (100) according to claim 9, further being operative to receive a switch confirmation from the loT device (200) by which the device management entity is informed that the loT device has switched to the other radio network.

11. The device management entity (100) according to claim 9, further being operative to receive a rejection message from the loT device (200) by which the device management entity is informed that the loT device has rejected the switch command and has not switched to the other radio network.

12. The device management entity (100) according to claim 9 or 10, further being operative to determine that the application data was successfully transmitted to the loT device (200) over the other radio network, and to transmit a further switch command to the loT device (200) instructing the loT device to switch the radio network back to the radio network having the lower transmission bandwidth, wherein the application data comprises a software update for the loT device (200), wherein the device management entity (100) further being operative to exchange the operating parameters with the loT device using a Light Weight Machine to Machine, LWM2M, protocol, and wherein the two radio networks comprise a Narrowband loT radio network and a LTE-M2M radio network .

13. The device management entity (100) according to 12, further being operative, for transmitting a switch command to the loT device (200), to instruct the IOT device to switch to the LTE-M2M radio network for the transmission of the application data, and to instruct, for transmitting a further switch command to the loT device, to switch back to the Narrowband loT radio network when the transmission of the application data is completed.

14. The device management entity (100) according to any of claims 9 to 13, further being operative to determine a connection quality of the radio network having the higher transmission bandwidth between the loT device (200) and the device management entity (100) taking into account the received response parameters, and to transmit the application data over the radio network having the lower transmission bandwidth when the connection quality is lower than a defined threshold.

15. The device management entity (100) according to any of claims 9 to 14, wherein the transmitted parameter request comprises the request to inform the device management entity (100) about at least one of the following operating parameters: a battery level of the loT device, a used network bearer, the available network bearers, a radio signal strength of the available network bearers, a software status indicating which software version the loT device is using,
and/or
wherein the device management entity (100) is further being operative to determine a connection quality between the loT device (200) and the device management entity (100) of the two radio networks, and to determine not to transmit the application data if the connection quality of both radio networks is lower than a defined threshold.

## Patentansprüche

1. Verfahren, ausgeführt durch eine Geräteverwaltungsentität (100), zum Senden von Anwendungsdaten an ein Internet-der-Dinge-, IoT, Gerät (200), das über zwei verschiedene Funknetzwerke zugänglich ist, die unterschiedliche Sendebandbreiten aufweisen, wobei das Verfahren umfasst:
- Bestimmen, dass die Anwendungsdaten dem IoT-Gerät (200) zur Verfügung stehen,
- Senden einer oder mehrerer Parameteranforderungen an das IoT-Gerät (200), in denen das IoT-Gerät aufgefordert wird, die Geräteverwaltungsentität (100) über eine Vielzahl von Betriebsparametern des IoT-Geräts zu informieren,
- Empfangen einer Parameterantwort auf die eine oder die mehreren Parameteranforderungen, wobei die Parameterantwort Antwortparameter umfasst, die mindestens einen der angeforderten Vielzahl von Betriebsparametern umfassen,
- Auswählen eines der Funknetzwerke für die Sendung der Anwendungsdaten in Abhängigkeit von den empfangenen Antwortparametern,
- Senden der Anwendungsdaten an das IoT-Gerät (200) über das ausgewählte Funknetzwerk;
wobei das IoT-Gerät (200) mit der Geräteverwaltungsentität (100) über das Funknetzwerk, das eine geringere Sendebandbreite als das andere Funknetzwerk aufweist, verbunden ist, wobei das Auswählen eines der Funknetzwerke das Auswählen des anderen Funknetzwerkes, das die höhere Sendebandbreite aufweist, umfasst, wobei das Verfahren umfasst:
- Senden eines Umschaltbefehls an das IoT-Gerät (200), der das IoT-Gerät anweist, von dem Funknetzwerk auf das andere Funknetzwerk umzuschalten.

2. Verfahren nach Anspruch 1, ferner umfassend:
- Empfangen einer Umschaltbestätigung von dem IoT-Gerät (200), durch welche die Geräteverwaltungsentität darüber informiert wird, dass das IoT-Gerät auf das andere Funknetzwerk umgeschaltet hat.

3. Verfahren nach Anspruch 1, ferner umfassend:
- Empfangen einer Ablehnungsnachricht von dem IoT-Gerät (200), durch welche die Geräteverwaltungseinheit darüber informiert wird, dass das IoT-Gerät den Umschaltbefehl abgelehnt und nicht auf das andere Funknetzwerk umgeschaltet hat.

4. Verfahren nach Anspruch 1 oder 2, ferner umfassend:
- Bestimmen, dass die Anwendungsdaten erfolgreich an das IoT-Gerät (200) über das andere Funknetzwerk gesendet wurden,
- Senden eines weiteren Umschaltbefehls an das IoT-Gerät (200), der das IoT-Gerät anweist, das Funknetzwerk auf das Funknetzwerk, das die geringere Sendebandbreite aufweist, zurückzuschalten, wobei die Anwendungsdaten eine Software-Aktualisierung für das IoT-Gerät (200) umfassen, wobei die Betriebsparameter zwischen der Geräteverwaltungsentität (100) und dem IoT-Gerät (200) unter Verwendung eines leichten Maschine-zu-Maschine-, LWM2M, Protokolls ausgetauscht werden, und wobei die beiden Funknetzwerke ein Schmalband-IoT-Funknetzwerk und ein LTE-M2M-Funknetzwerk umfassen.

5. Verfahren nach Anspruch 4, wobei das Senden eines Umschaltbefehls an das IoT-Gerät (200) umfasst, das IoT-Gerät anzuweisen, für die Sendung der Anwendungsdaten auf das LTE-M2M-Funknetzwerk umzuschalten, wobei das Senden eines weiteren Umschaltbefehls an das IoT-Gerät (200) umfasst, das IoT-Gerät (200) anzuweisen, auf das Schmalband-IoT-Funknetzwerk zurückzuschalten, wenn die Sendung der Anwendungsdaten beendet ist.

6. Verfahren nach einem der vorhergehenden Ansprüche, wobei ferner eine Verbindungsqualität des Funknetzwerks, dass die höhere Sendebandbreite aufweist, zwischen dem IoT-Gerät (200) und der Geräteverwaltungsentität (100) unter Berücksichtigung der empfangenen Antwortparameter bestimmt wird, wobei, wenn die Verbindungsqualität geringer als eine definierte Schwelle ist, die Anwendungsdaten über das Funknetzwerk, das die geringere Sendebandbreite aufweist, gesendet werden.

7. Verfahren nach einem der vorhergehenden Ansprüche, wobei die gesendete Parameteranforderung die Anforderung umfasst, die Geräteverwaltungsentität (100) über mindestens einen der folgenden Betriebsparameter zu informieren: einen Batteriestand des IoT-Geräts, einen verwendeten Netzwerkträger, die verfügbaren Netzwerkträger, eine Funksignalstärke der verfügbaren Netzwerkträger, einen Software-Status, der angibt, welche Software-Version das IoT-Gerät verwendet.

8. Verfahren nach einem der vorhergehenden Ansprüche, wobei ferner eine Verbindungsqualität zwischen dem IoT-Gerät (200) und der Geräteverwaltungsentität (100) der beiden Funknetzwerke bestimmt wird, wobei bestimmt wird, die Anwendungsdaten nicht zu senden, falls die Verbindungsqualität der beiden Funknetzwerke geringer als eine definierte Schwelle ist.

9. Geräteverwaltungsentität (100), die dazu konfiguriert ist, Anwendungsdaten an ein Internet-der-Dinge-, IoT, Gerät (200) zu senden, das über zwei verschiedene Funknetzwerke zugänglich ist, die unterschiedliche Sendebandbreiten aufweisen, wobei die Geräteverwaltungsentität einen Speicher (130) und mindestens eine Verarbeitungseinheit (120) umfasst, wobei der Speicher Anweisungen enthält, die durch die mindestens eine Verarbeitungseinheit ausführbar sind, wobei die Geräteverwaltungsentität betriebsfähig ist zum:
- Bestimmen, dass die Anwendungsdaten dem IoT-Gerät (200) zur Verfügung stehen,
- Senden einer oder mehrerer Parameteranforderungen an das IoT-Gerät, in denen das IoT-Gerät aufgefordert wird, die Geräteverwaltungsentität über eine Vielzahl von Betriebsparametern des IoT-Geräts zu informieren,
- Empfangen einer Parameterantwort auf die eine oder die mehreren Parameteranforderungen, wobei die Parameterantwort Antwortparameter umfasst, die mindestens einen der angeforderten Vielzahl von Parametern umfassen,
- Auswählen eines der Funknetzwerke für die Sendung der Anwendungsdaten in Abhängigkeit von den empfangenen Antwortparametern,
- Senden der Anwendungsdaten an das IoT-Gerät über das ausgewählte Funknetzwerk;
wobei das IoT-Gerät (200) mit der Geräteverwaltungsentität (100) über das Funknetzwerk, das eine geringere Sendebandbreite als das andere Funknetzwerk aufweist, verbunden ist, wobei die Geräteverwaltungsentität betriebsfähig ist, um eines der Funknetzwerke auszuwählen, um das andere Funknetzwerk, das die höhere Sendebandbreite aufweist, auszuwählen, und um einen Umschaltbefehl an das IoT-Gerät (200) zu senden, der das IoT-Gerät anweist, von dem Funknetzwerk auf das andere Funknetzwerk umzuschalten.

10. Geräteverwaltungsentität (100) nach Anspruch 9, die ferner betriebsfähig ist, um eine Umschaltbestätigung von dem IoT-Gerät (200) zu empfangen, über welche die Geräteverwaltungsentität darüber informiert wird, dass das IoT-Gerät auf das andere Funknetzwerk umgeschaltet hat.

11. Geräteverwaltungsentität (100) nach Anspruch 9, die ferner betriebsfähig ist, um eine Ablehnungsnachricht von dem IoT-Gerät (200) zu empfangen, über welche die Geräteverwaltungsentität darüber informiert wird, dass das IoT-Gerät den Umschaltbefehl abgelehnt und nicht auf das andere Funknetzwerk umgeschaltet hat.

12. Geräteverwaltungsentität (100) nach Anspruch 9 oder 10, die ferner betriebsfähig ist, um zu bestimmen, dass die Anwendungsdaten erfolgreich an das IoT-Gerät (200) über das andere Funknetzwerk gesendet wurden, und um einen weiteren Umschaltbefehl an das IoT-Gerät (200) zu senden, der das IoT-Gerät anweist, das Funknetzwerk auf das Funknetzwerk, das die geringere Sendebandbreite aufweist, zurückzuschalten, wobei die Anwendungsdaten eine Software-Aktualisierung für das IoT-Gerät (200) umfassen, wobei die Geräteverwaltungsentität (100) ferner betriebsfähig ist, um die Betriebsparameter mit dem IoT-Gerät unter Verwendung eines leichten Maschine-zu-Maschine-, LWM2M, Protokolls auszutauschen, und wobei die beiden Funknetzwerke ein Schmalband-IoT-Funknetzwerk und ein LTE-M2M-Funknetzwerk umfassen.

13. Geräteverwaltungsentität (100) nach Anspruch 12, die ferner betriebsfähig ist, um einen Umschaltbefehl an das IoT-Gerät (200) zu senden, um das IoT-Gerät anzuweisen, für die Sendung der Anwendungsdaten auf das LTE-M2M-Funknetzwerk umzuschalten, und um es anzuweisen, für die Sendung eines weiteren Umschaltbefehls an das IoT-Gerät auf das Schmalband-IoT-Funknetzwerk zurückzuschalten, wenn die Sendung der Anwendungsdaten beendet ist.

14. Geräteverwaltungsentität (100) nach einem der Ansprüche 9 bis 13, die ferner betriebsfähig ist, um eine Verbindungsqualität des Funknetzwerks, das die höhere Sendebandbreite aufweist, zwischen dem IoT-Gerät (200) und der Geräteverwaltungsentität (100) unter Berücksichtigung der empfangenen Antwortparameter zu bestimmen, und um die Anwendungsdaten über das Funknetzwerk, das die geringere Sendebandbreite aufweist, zu senden, wenn die Verbindungsqualität geringer als eine definierte Schwelle ist.

15. Geräteverwaltungsentität (100) nach einem der Ansprüche 9 bis 14, wobei die gesendete Parameteranforderung die Anforderung umfasst, die Geräteverwaltungsentität (100) über mindestens einen der folgenden Betriebsparameter zu informieren: einen Batteriestand des IoT-Geräts, einen verwendeten Netzwerkträger, die verfügbaren Netzwerkträger, eine Funksignalstärke der verfügbaren Netzwerkträger, einen Softwarestatus, der angibt, welche Software-Version das IoT-Gerät verwendet, und/oder
wobei die Geräteverwaltungsentität (100) ferner betriebsfähig ist, um eine Verbindungsqualität zwischen dem IoT-Gerät (200) und der Geräteverwaltungsentität (100) der beiden Funknetzwerke zu bestimmen, und um zu bestimmen, die Anwendungsdaten nicht zu senden, falls die Verbindungsqualität der beiden Funknetzwerke geringer als eine definierte Schwelle ist.

## Revendications

1. Procédé, par une entité de gestion de dispositif (100), de transmission de données d'application à un dispositif (200) d'Internet des Objets, IoT, qui est accessible par l'intermédiaire de deux réseaux radio différents ayant des bandes passantes de transmission différentes, le procédé comprenant :
- la détermination du fait que les données d'application sont disponibles pour le dispositif IoT (200),
- la transmission d'une ou de plusieurs demandes de paramètres au dispositif IoT (200) dans lesquelles le dispositif IoT est invité à informer l'entité de gestion de dispositif (100) sur une pluralité de paramètres de fonctionnement du dispositif IoT,
- la réception d'une réponse de paramètres aux une ou plusieurs demandes de paramètres, la réponse de paramètres comprenant des paramètres de réponse incluant au moins l'un de la pluralité de paramètres de fonctionnement demandés,
- la sélection d'un des réseaux radio pour la transmission des données d'application en fonction des paramètres de réponse reçus,
- la transmission des données d'application au dispositif IoT (200) sur le réseau radio sélectionné ;
dans lequel le dispositif IoT (200) est connecté à l'entité de gestion de dispositif (100) sur le réseau radio ayant une bande passante de transmission inférieure à celle de l'autre réseau radio, dans lequel la sélection de l'un des réseaux radio comprend la sélection de l'autre réseau radio ayant la bande passante de transmission supérieure, le procédé comprenant :
- la transmission d'une commande de commutation au dispositif IoT (200) fournissant au dispositif IoT une instruction de commutation du réseau radio vers l'autre réseau radio.

2. Procédé selon la revendication 1, comprenant en outre :
- la réception d'une confirmation de commutation provenant du dispositif IoT (200) par laquelle l'entité de gestion de dispositif est informée que le dispositif IoT a commuté vers l'autre réseau radio.

3. Procédé selon la revendication 1, comprenant en outre :
- la réception d'un message de rejet provenant du dispositif IoT (200) par lequel l'entité de gestion de dispositif est informée que le dispositif IoT a rejeté la commande de commutation et n'a pas commuté vers l'autre réseau radio.

4. Procédé selon la revendications 1 ou 2, comprenant en outre :
- la détermination du fait que les données d'application ont été transmises avec succès au dispositif IoT (200) sur l'autre réseau radio,
- la transmission d'une autre commande de commutation au dispositif IoT (200) fournissant au dispositif IoT une instruction pour basculer le réseau radio vers le réseau radio ayant la bande passante de transmission inférieure, dans lequel les données d'application comprennent une mise à jour logicielle pour le dispositif IoT (200), dans lequel les paramètres de fonctionnement sont échangés entre l'entité de gestion de dispositif (100) et le dispositif IoT (200) à l'aide d'un protocole machine légère à machine, LWM2M, et dans lequel les deux réseaux radio comprennent un réseau radio IoT à bande étroite et un réseau radio LTE-M2M.

5. Procédé selon la revendication 4, dans lequel la transmission d'une commande de commutation au dispositif IoT (200) comprend la fourniture au dispositif IoT d'une instruction de commutation vers le réseau radio LTE-M2M pour la transmission des données d'application, dans lequel la transmission d'une autre commande de commutation au dispositif IoT comprend la fourniture au dispositif IoT (200) d'une instruction de basculement vers le réseau radio IoT à bande étroite lorsque la transmission des données d'application est terminée.

6. Procédé selon une quelconque revendication précédente, déterminant en outre une qualité de connexion du réseau radio ayant la bande passante de transmission supérieure entre le dispositif IoT (200) et l'entité de gestion de dispositif (100) en tenant compte des paramètres de réponse reçus, dans lequel lorsque la qualité de connexion est inférieure à un seuil défini, les données d'application sont transmises sur le réseau radio ayant la bande passante de transmission inférieure.

7. Procédé selon une quelconque revendication précédente, dans lequel la demande de paramètres transmise comprend la demande d'information de l'entité de gestion de dispositif (100) sur au moins un des paramètres de fonctionnement suivants : un niveau de batterie du dispositif IoT, un support réseau utilisé, les supports réseau disponibles, une puissance de signal radio des supports réseau disponibles, un état de logiciel indiquant la version logicielle utilisée par le dispositif IoT.

8. Procédé selon l'une quelconque des revendications précédentes, déterminant en outre une qualité de connexion entre le dispositif IoT (200) et l'entité de gestion de dispositif (100) des deux réseaux radio, dans lequel il est déterminé de ne pas transmettre les données d'application si la qualité de connexion des deux réseaux radio est inférieure à un seuil défini.

9. Entité de gestion de dispositif (100) configurée pour transmettre des données d'application à un dispositif (200) d'Internet des objets, IoT, qui est accessible par l'intermédiaire de deux réseaux radio différents ayant des bandes passantes de transmission différentes, l'entité de gestion de dispositif comprenant une mémoire (130) et au moins une unité de traitement (120), la mémoire contenant des instructions exécutables par l'au moins une unité de traitement, dans laquelle l'entité de gestion de dispositif peut fonctionner pour :
- déterminer que les données d'application sont disponibles pour le dispositif IoT (200),
- transmettre une ou plusieurs demandes de paramètres au dispositif IoT dans lesquelles le dispositif IoT est invité à informer l'entité de gestion de dispositif sur une pluralité de paramètres de fonctionnement du dispositif IoT,
- recevoir une réponse de paramètres aux une ou plusieurs demandes de paramètres, la réponse de paramètres comprenant des paramètres de réponse incluant au moins l'un de la pluralité de paramètres de fonctionnement demandés,
- sélectionner l'un des réseaux radio pour la transmission des données d'application en fonction des paramètres de réponse reçus,
- transmettre les données d'application au dispositif IoT sur le réseau radio sélectionné ;
dans laquelle le dispositif IoT (200) est connecté à l'entité de gestion de dispositif (100) sur le réseau radio ayant une bande passante de transmission inférieure à celle de l'autre réseau radio, l'entité de gestion de dispositif pouvant fonctionner, pour la sélection de l'un des réseaux radio, pour sélectionner l'autre réseau radio ayant la bande passante de transmission supérieure et pour transmettre une commande de commutation au dispositif IoT (200) fournissant au dispositif IoT une instruction de commutation du réseau radio vers l'autre réseau radio.

10. Entité de gestion de dispositif (100) selon la revendication 9, pouvant en outre fonctionner pour recevoir une confirmation de commutation provenant du dispositif IoT (200) par laquelle l'entité de gestion de dispositif est informée que le dispositif IoT a commuté vers l'autre réseau radio.

11. Entité de gestion de dispositif (100) selon la revendication 9, pouvant en outre fonctionner pour recevoir un message de rejet provenant du dispositif IoT (200) par lequel l'entité de gestion de dispositif est informée que le dispositif IoT a rejeté la commande de commutation et n'a pas commuté vers l'autre réseau radio.

12. Entité de gestion de dispositif (100) selon la revendication 9 ou 10, pouvant en outre fonctionner pour déterminer que les données d'application ont été transmises avec succès au dispositif IoT (200) sur l'autre réseau radio, et pour transmettre une autre commande de commutation au dispositif IoT (200) fournissant au dispositif IoT une instruction de basculement du réseau radio vers le réseau radio ayant la bande passante de transmission inférieure, dans laquelle les données d'application comprennent une mise à jour logicielle pour le dispositif IoT (200), dans laquelle l'entité de gestion de dispositif (100) pouvant en outre fonctionner pour échanger les paramètres de fonctionnement avec le dispositif IoT à l'aide d'un protocole machine légère à machine, LWM2M, et dans laquelle les deux réseaux radio comprennent un réseau radio IoT à bande étroite et un réseau radio LTE-M2M.

13. Entité de gestion de dispositif (100) selon la revendication 12, pouvant en outre fonctionner, pour la transmission d'une commande de commutation au dispositif IoT (200), pour fournir au dispositif IoT une instruction de commutation vers le réseau radio LTE-M2M pour la transmission des données d'application, et pour fournir, pour la transmission d'une autre commande de commutation au dispositif IoT, une instruction de basculement vers le réseau radio IoT à bande étroite lorsque la transmission des données d'application est terminée.

14. Entité de gestion de dispositif (100) selon l'une quelconque des revendications 9 à 13, pouvant en outre fonctionner pour déterminer une qualité de connexion du réseau radio ayant la bande passante de transmission supérieure entre le dispositif IoT (200) et l'entité de gestion de dispositif (100) en tenant compte des paramètres de réponse reçus, et pour transmettre les données d'application sur le réseau radio ayant la bande passante de transmission inférieure lorsque la qualité de connexion est inférieure à un seuil défini.

15. Entité de gestion de dispositif (100) selon l'une quelconque des revendications 9 à 14, dans laquelle la demande de paramètres transmise comprend la demande d'information de l'entité de gestion de dispositif (100) sur au moins un des paramètres de fonctionnement suivants : un niveau de batterie du dispositif IoT, un support réseau utilisé, les supports réseau disponibles, une puissance de signal radio des supports réseau disponibles, un état de logiciel indiquant la version logicielle utilisée par le dispositif IoT et/ou
dans laquelle l'entité de gestion de dispositif (100) pouvant en outre fonctionner pour déterminer une qualité de connexion entre le dispositif IoT (200) et l'entité de gestion de dispositif (100) des deux réseaux radio, et pour déterminer de ne pas transmettre les données d'application si la qualité de connexion des deux réseaux radio est inférieure à un seuil défini.
